# EUROPÄISCHE PATENTSCHRIFT

(11) **EP 2 688 933 B1**
(45) Veröffentlichungstag und Bekanntmachung des Hinweises auf die Patenterteilung: **13.05.2015**
(21) Anmeldenummer: 12709885.3
(22) Anmeldetag: 21.03.2012
(51) Int. Cl.: C08G 18/18, C08G 18/40, C08G 18/48

(54) **PU HARTSCHAUM MIT NIEDRIGER WÄRMELEITFÄHIGKEIT UND GUTER THERMISCHER STABILITÄT**
PU RIGID FOAM WITH LOW THERMAL CONDUCTIVITY AND GOOD THERMAL STABILITY
MOUSSE DE POLYURÉTHANE RIGIDE À CONDUCTIVITÉ THERMIQUE FAIBLE ET STABILITÉ THERMIQUE ÉLEVÉE

(30) Priorität: 22.03.2011 EP 11159157
(43) Veröffentlichungstag der Anmeldung: 29.01.2014
(73) Patentinhaber: BASF SE, 67056 Ludwigshafen (DE)
(72) Erfinder: TOMASI, Gianpaolo, 49356 Diepholz (DE); GRIESER-SCHMITZ, Christof, 49088 Osnabrück (DE); WINDELER, Ludwig, 49448 Marl (DE); ELLERSIEK, Carsten, 49525 Lengerich (DE); KAMPF, Gunnar, 32351 Stemwede-Haldem (DE)
(86) Internationale Anmeldenummer: PCT/EP2012/054929
(87) Internationale Veröffentlichungsnummer: WO 2012/126916

(56) Entgegenhaltungen:
- EP-A1- 1 167 414
- EP-A1- 1 288 239
- WO-A1-00/15690
- WO-A1-2005/044889
- WO-A1-2010/114703
- DE-A1- 19 916 647
- US-A- 5 648 019
- US-A1- 2005 148 677

## Beschreibung

Die vorliegende Erfindung betrifft einen Polyurethan-Schaumstoff, erhältlich durch Umsetzung von mindestens einem Polyetherpolyol als Komponente (A), basierend auf mindestens einer Verbindung ausgewählt aus der Gruppe bestehend aus Trimethylolpropan, Glycerin, Pentaerythrit, Zuckerverbindungen wie beispielsweise Glukose, Sorbit, Mannit und Saccharose, und Mischungen davon, mindestens einem Polyetherpolyol basierend auf mindestens einem Amin als Komponente (B), mindestens einem Polyesterpolyol als Komponente (C) und mindestens einem Polyisocyanat als Komponente (D), in Gegenwart mindestens eines Katalysators ausgewählt aus der Gruppe bestehend aus Salzen von Carbonsäuren mit 1 bis 20 C-Atomen, amin-haltigen Verbindungen und Mischungen davon als Komponente (E) und mindestens einem Treibmittel als Komponente (F), wobei das Verhältnis von OCN-Gruppen zu OH-Gruppen (ISO-Index) 145 bis 165 beträgt. Des Weiteren betrifft die vorliegende Erfindung ein Verfahren zur Herstellung dieses Polyurethan-Schaumstoffes, dessen Verwendung zur Dämmung, insbesondere zur Dämmung von Rohren, sowie eine Rohrdämmung enthaltend einen erfindungsgemäßen Polyurethan-Schaumstoff.

Polyurethan-Schaumstoffe, welche zur Dämmung von Rohren verwendet werden können, sind aus dem Stand der Technik bereits bekannt.

WO 00/15690 A1 beschreibt zur Herstellung wassergetriebener Polyurethanschäume geeignete Polyole. Das Dokument betrifft insbesondere Mannich-Polyole, die zur Herstellung wassergetriebener Polyurethanschäume geeignet sind.

WO 2010/114703 A1 beschreibt Polyurethan- und Polyisocyanuratschäume mit einer verbesserten Aushärtungsleistung und Flammverhalten.

US 5 648 019 A beschreibt einen Dreikomponenten-Polyolblend zur Verwendung in isolierenden, starren Polyurethanschäumen. Dabei wird eine organische Isocyanat-Komponente mit einer Polyol-Komponente in Gegenwart eines Treibmittels verwendet.

EP 1167417 A1 beschreibt ein Verfahren zur Herstellung starrer Polyurethanschäume mit einer hohen Adhäsion.

US 2005/148677 A1 beschreibt starre Polyurethanschäume, hergestellt durch Mischen eines Isocyanates mit einer Polyol-Komponente, enthaltend ein aromatisches, Amin-initiiertes Polyetherpolyol, einen aromatischen Polyester und gegebenenfalls einen auf Saccharose basierenden Polyetherpolyol.

WO 2005/044889 A1 beschreibt starre Polyurethanschäume hergestellt unter Verwendung einer Polyol-Komponente, die ein Toluol-Diiamin-initiiertes Polyol enthält, mit einem spezifizierten Gehalt an Oxyethylengruppen.

DE 199 16 647 A1 beschreibt ein Polyolgemisch, das a) 5 bis 60 Gew.-% eines oder mehrerer Additionsprodukt(e) von Alkylenoxid an aromatischem Di- oder Polyamin, wobei im Additionsprodukt das molare Verhältnis von Alkylenoxid zu an Stickstoff gebundenen Wasserstoffatomen im aromatischen Di- oder Polyamin maximal 1:1 beträgt, und b) 40 bis 95 Gew.-% Polyether- und/oder Polyesterpolyole mit OH- Zahlen von 250 bis 500 enthält.

US 2006/0052467 offenbart eine Polyolzusammensetzung, welche dazu geeignet ist, mit entsprechenden Polyisocyanaten zu Schäumen verarbeitet zu werden.

DE 10 2004 001 317 A1 offenbart Polyurethanschaumstoffe zur Rohrdämmung. Diese Polyurethanschaumstoffe sind durch Umsetzung einer Isocyanatkomponente (a) mit einer Polyolmischung (b) erhältlich, wobei die Polyolmischung Polyole mit einer Hydroxylzahl von größer als 70 mg KOH/g enthält und eine Viskosität weniger als 3000 mPa·s, gemessen nach DIN 53019 bei 20 °C, aufweist. Allgemein wird in dieser Schrift offenbart, dass als Polyole Verbindungen mit mindestens zwei gegenüber Isocyanat reaktiven Gruppen in Betracht kommen. Beispiele dafür sind Verbindungen mit OH-Gruppen, SH-Gruppen und/oder NH₂-Gruppen.

EP 1 288 239 A1 offenbart ein Verfahren zur Herstellung von festen Urethan-Polyisocyanurat-Schäumen. Diese enthalten verschiedene Polyolpolyether.

WO 98/37116 offenbart ebenfalls ein Verfahren zur Herstellung von festen Polyurethan-Schäumen durch Umsetzung einer Polyisocyanat-Komponente mit einer Mischung von Polyolkomponenten. Gemäß diesem Dokument ist die Polyisocyanat-Komponente eine Polymethylenpolyphenylpolyisocyanat-Verbindung oder ein Derivat davon. Die Mischung der Polyolkomponenten umfasst ein Polyol, welches dadurch erhalten wird, dass ein Alkylenoxid an ein aliphatisches Amin angebunden wird, und ein aromatisches Polyetherpolyol, welches erhalten wird, indem ein Alkylenoxid an ein aromatisches Amin angebunden wird.

US 2003/0134923 A1 offenbart ebenfalls Polyurethan-Schaumstoffe enthaltend das Reaktionsprodukt eines organisches Polyisocyanats und eines Polyesterpolyols.

WO 2005/090432 A1 offenbart ein Verfahren zur Herstellung von festen Polyurethan-Schaumstoffen mit einem Isocyanat-Index von 110 bis 120 durch Umsetzen einer organischen Polyisocyanat-Zusammensetzung mit einem gegenüber Isocyanatgruppen reaktiven Gemisch. Neben Polyesterpolyololen liegen auch Polyetherole, welche auf aromatischen Aminen basieren, in der beschriebenen Reaktionsmischung vor.

EP 1 735 365 B1 offenbart Polyurethane und ein Verfahren zu ihrer Herstellung. Dazu wird eine organische Polyisocyanat-Zusammensetzung mit einer gegenüber Isocyanatgruppen reaktiven Zusammensetzung, enthaltend beispielsweise Polyetherpolyole oder Polyesterpolyolpolyole, umgesetzt.

WO 00/63276 A1 offenbart ein Polyolgemisch für die Herstellung von Polyurethan-Hartschäumen. Dieses Gemisch enthält Additionsprodukte von Alkylenoxiden an aromatische Di- oder Polyamine. Als gegenüber Isocyanatgruppen reaktiven Verbindungen kann auch ein Polyesterpolyolpolyol vorliegen.

Die aus dem Stand der Technik bekannten Polyurethan-Schäume sind bezüglich ihrer Wärmeleitfähigkeit und ihrem thermischen Verhalten noch zu verbessern. Insbesondere kann in den Polyurethan-Schaumstoffen gemäß dem Stand der Technik die Wärmeleitfähigkeit reduziert werden, ohne dass sich die thermischen Stabilitäten verschlechtern.

Aufgabe der vorliegenden Erfindung gegenüber dem Stand der Technik ist es daher, einen Polyurethan-Schaumstoff bereitzustellen, der sich durch ein besonders ausgewogenes und damit vorteilhaftes Eigenschaftsprofil bezüglich Wärmeleitfähigkeit und thermischer Stabilität auszeichnet. Es soll ein Polyurethan-Schaumstoff bereitgestellt werden, der eine besonders geringe Wärmeleitfähigkeit aufweist, da der erfindungsgemäße Polyurethan-Schaumstoff beispielsweise als Dämmung, insbesondere als Rohrdämmung, verwendet werden soll. Neben einer niedrigen Wärmeleitfähigkeit soll der erfindungsgemäße Polyurethan-Schaumstoff eine gute thermische Stabilität aufweisen.

Diese Aufgaben werden erfindungsgemäß gelöst durch einen Polyurethan-Schaumstoff, erhältlich durch Umsetzung von
(A) mindestens einem Polyetherpolyol als Komponente (A), basierend auf mindestens einer Verbindung ausgewählt aus der Gruppe bestehend aus Trimethylolpropan, Glycerin, Pentaerythrit, Zuckerverbindungen wie beispielsweise Glukose, Sorbit, Mannit und Saccharose, und Mischungen davon,
(B) mindestens einem Polyetherpolyol basierend auf mindestens einem Amin als Komponente (B),
(C) mindestens einem Polyesterpolyol als Komponente. (C) und
(D) mindestens einem Polyisocyanat als Komponente (D),

in Gegenwart mindestens eines Katalysators ausgewählt aus der Gruppe bestehend aus Salzen von Carbonsäuren mit 1 bis 20 C-Atomen, aminhaltigen Verbindungen und Mischungen davon als Komponente (E) und mindestens einem Treibmittel als Komponente (F), wobei das Verhältnis von OCN-Gruppen zu OH-Gruppen (ISO-Index) 145 bis 165 beträgt.

Die Aufgaben werden des Weiteren gelöst durch ein Verfahren zur Herstellung eines erfindungsgemäßen Polyurethan-Schaumstoffs, umfassend mindestens die folgenden Schritte:
(I) Inkontaktbringen der Komponenten (A), (B), (C), (D), (E) und (F), um ein Reaktionsprodukt zu erhalten, und
(II) Aufschäumen des in Schritt (I) erhaltenen Reaktionsproduktes.

Die Aufgaben werden auch gelöst durch die Verwendung des erfindungsgemäßen Polyurethan-Schaumstoffs zur Dämmung, und durch ein gedämmtes Rohr, enthaltend einen erfindungsgemäßen Polyurethan-Schaumstoff.

Die einzelnen Komponenten des erfindungsgemäßen Polyurethan-Schaumstoffs werden im Folgenden detailliert beschrieben:

### Komponente (A):

Als Komponente (A) liegt in dem erfindungsgemäßen Polyurethan-Schaumstoff mindestens ein Polyetherpolyol vor. Im Rahmen der vorliegenden Erfindung sind als Komponente (A) im Allgemeinen alle dem Fachmann bekannten Polyetherpolyole geeignet.

Bevorzugt wird als Komponente (A) ein Polyetherpolyol basierend auf mindestens einem mehrwertigen Alkohol eingesetzt.

Erfindungsgemäß bevorzugt werden als Komponente (A) Polyetherpolyole mit mindestens zwei gegenüber Isocyanaten reaktiven Wasserstoffatomen eingesetzt, bevorzugt Polyetherpolyole mit OH-Zahlen im Bereich von 100 bis 1200 mgKOH/g.

Die bevorzugt eingesetzten Polyetherpolyole weisen beispielsweise eine Funktionalität zwischen 2 und 8, insbesondere 3 bis 8, auf.

Bevorzugt als Komponente (A) eingesetzte Polyetherpolyole werden nach dem Fachmann bekannten Verfahren hergestellt, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 2, vorzugsweise 3 bis 8, Hydroxylgruppen im Molekül zum Einsatz.

Als Startmoleküle mit mindestens 2, vorzugsweise 3 bis 8 Hydroxylgruppen im Molekül werden vorzugsweise Trimethylopropan, Glycerin, Pentaerythrit, Zuckerverbindungen wie beispielsweise Glukose, Sorbit, Mannit und Saccharose, eingesetzt.

Die vorliegende Erfindung betrifft daher bevorzugt den erfindungsgemäßen Polyurethan-Schaumstoff, wobei das mindestens eine Polyetherpolyol (Komponente (A)) auf mindestens einer Verbindung ausgewählt aus der Gruppe bestehend aus Trimethylopropan, Glycerin, Pentaerythrit, Zuckerverbindungen wie beispielsweise Glukose, Sorbit, Mannit und Saccharose und Mischungen davon basiert.

Die als Komponente (A) eingesetzten Polyetherpolyole besitzen eine Funktionalität von vorzugsweise 3 bis 8. Des Weiteren besitzen die als Komponente (A) eingesetzten Polyetherpolyole Hydroxylzahlen von vorzugsweise 100 mgKOH/g bis 1200 mgKOH/g und insbesondere 240 mgKOH/g bis 570 mgKOH/g.

In einer bevorzugten Ausführungsform wird als Komponente (A) eine Mischung von 2, 3, 4 oder 5 Polyetherpolyolen eingesetzt, die sich beispielsweise durch das Startermolekül und/oder die eingesetzten Alkylenoxide unterscheiden.

Beispielsweise wird als Komponente (A) eine Mischung enthaltend mindestens ein Polyetherpolyol basierend auf einem Mehrfachzucker als Komponente (a1) eingesetzt. Der Mehrfachzucker ist beispielsweise Saccharose.

In einer bevorzugten Ausführungsform basieren die als Komponente (a1) eingesetzten Polyetherpolyole nicht ausschließlich auf mindestens einem Mehrfachzucker, sondern es werden weitere mehrwertige Alkohole als Basis eingesetzt, beispielsweise ausgewählt aus Pentaerythrit und/oder Diethylenglykol.

Das als Komponente (a1) eingesetzte Polyetherpolyol weist beispielsweise eine OH-Zahl von 100 bis 700 mg KOH/g, bevorzugt 200 bis 600 mg KOH/g, besonders bevorzugt 300 bis 500 mg KOH/g, ganz besonders bevorzugt 350 bis 450 mg KOH/g, auf.

In einer weiteren bevorzugten Ausführungsform weist das als Komponente (a1) eingesetzte Polyetherpolyol eine mittlere Funktionalität von beispielsweise 2 bis 6, bevorzugt 3 bis 5, besonders bevorzugt 3,5 bis 4,5, auf.

In der bevorzugt als Komponente (A) eingesetzten Mischung von Polyetherpolyolen liegt bevorzugt ein weiteres Polyetherpoplyol basierend auf mindestens einem Einfachzucker (a2) vor.

Ein Einfachzucker, auf dem Komponente (a2) basiert, ist beispielsweise Sorbitol.

Das als Komponente (a2) eingesetzte Polyetherpolyol weist beispielsweise eine OH-Zahl von 200 bis 800 mg KOH/g, bevorzugt 300 bis 700 mg KOH/g, besonders bevorzugt 400 bis 600 mg KOH/g, ganz besonders bevorzugt 450 bis 550 mg KOH/g, auf.

In einer weiteren bevorzugten Ausführungsform weist das als Komponente (a2) eingesetzte Polyetherpolyol eine mittlere Funktionalität von beispielsweise 3 bis 7, bevorzugt 4 bis 6, besonders bevorzugt 4,5 bis 5,5, auf.

Als weiteres Polyetherpolyol, welches in der bevorzugt als Komponente (A) eingesetzten Mischung von Polyetherpolyolen vorliegt, liegt als Komponente (a3) bevorzugt mindestens ein Polyetherpolyol basierend auf mindestens einem mindestens zweiwertigen Alkohol in der Mischung vor.

Die mindestens zweiwertigen Alkohole, der in Komponente (a3) vorliegen, können zwei-, drei-, vier- oder fünfwertig sein, d. h. die enthalten zwei, drei, vier oder fünf Hydroxygruppen pro Molekül.

Ein besonders bevorzugter mindestens zweiwertiger Alkohol, die in Komponente (a3) vorliegt, ist beispielsweise Glyzerin.

In einer weiteren bevorzugten Ausführungsform weist das als Komponente (a3) eingesetzte Polyetherpolyol eine OH-Zahl von beispielsweise 500 bis 1100 mg KOH/g, bevorzugt 600 bis 1000 mg KOH/g, besonders bevorzugt 700 bis 900 mg KOH/g, auf.

In einer weiteren bevorzugten Ausführungsform weist das als Komponente (a3) eingesetzte Polyetherpolyol eine mittlere Funktionalität von beispielsweise 1 bis 5, bevorzugt 2 bis 4, besonders bevorzugt 2,5 bis 3,5, auf.

In einer besonders bevorzugten Ausführungsform wird in dem erfindungsgemäßen Polyurethan-Schaumstoff als Komponente (A) eine Mischung umfassend mindestens ein Polyetherpolyol basierend auf einem Mehrfachzucker (a1), mindestens ein Polyetherpolyol basierend auf einem Einfachzucker (a2) und mindestens ein Polyetherpolyol basierend auf mindestens einem mindestens zweiwertigen Alkohol (a3), eingesetzt.

Die vorliegende Erfindung betrifft daher bevorzugt den erfindungsgemäßen Polyurethan-Schaumstoff, wobei als Komponente (A) eine Mischung umfassend mindestens ein Polyetherpolyol basierend auf einem Mehrfachzucker (a1), mindestens ein Polyetherpolyol basierend auf einem Einfachzucker (a2) und mindestens ein Polyetherpolyol basierend auf mindestens einem mindestens zweiwertigen Alkohol (a3), eingesetzt wird.

Komponente (A) liegt in dem erfindungsgemäßen Polyurethan-Schaumstoff im Allgemeinen in einer Menge von 10 bis 60 Gew.-%, bevorzugt 20 bis 50 Gew.-%, besonders bevorzugt 25 bis 45 Gew.-%, jeweils bezogen auf die Summe der Komponenten (A), (B), (C) und (E), vor. Wird als Komponente (A) eine Mischung verschiedener Polyetherpolyole eingesetzt, so beziehen sich die genannten Mengen auf diese Mischung.

Die Summe der Komponenten (A), (B), (C) und (E) beträgt erfindungsgemäß immer 100 Gew.-%.

### Komponente (B):

Als Komponente (B) liegt in dem erfindungsgemäßen Polyurethan-Schaumstoff mindestens ein Polyetherpolyol basierend auf mindestens einem Amin vor. Im Rahmen der vorliegenden Erfindung sind als Komponente (B) im Allgemeinen alle Polyetherpolyole geeignet, die die genannten Bedingungen erfüllen.

Die Amine, die in Komponente (B) vorliegen, sind beispielsweise ausgewählt aus der Gruppe bestehend aus Aminen mit mindestens zwei primären Aminogruppen im Molekül, bevorzugt werden aromatische Di- und/oder Polyamine, beispielsweise Phenylendiamine, 2,3-, 2,4-, 3,4-und 2,6-Toluylendiamin oder 4,4'-, 2,4'- und 2,2'-Diamino-diphenylmethan sowie aliphatische Di- und Polyamine, wie Ethylendiamin eingesetzt.

Bevorzugt wird als Startermolekül für Komponente (B) Toluylendiamin (TDA) verwendet, wobei eines der genannten Isomere oder eine Mischung der genannten Isomere verwendet werden kann.

Die vorliegende Erfindung betrifft daher bevorzugt einen erfindungsgemäßen Polyurethan-Schaumstoff, wobei das mindestens eine Amin in Komponente (B) Toluylendiamin (TDA) ist.

Komponente (B) des erfindungsgemäßen Polyurethan-Schaumstoffs wird beispielsweise erhalten, indem ein Alkylenoxid, beispielsweise ausgewählt aus der Gruppe bestehend aus Tetrahydrofuran, Ethylenoxid, Propylenoxid, 1,2- bzw. 2,3-Butylenoxid, Styroloxid und Mischungen davon, bevorzugt eine Mischung von Ethylenoxid und Propylenoxid, mit den genannten Aminen umgesetzt werden. Reaktionsbedingungen für diese Umsetzung sind dem Fachmann an sich bekannt.

In einer weiteren bevorzugten Ausführungsform weist das als Komponente (B) eingesetzte Polyetherpolyol eine OH-Zahl von beispielsweise 100 bis 700 mg KOH/g, bevorzugt 200 bis 600 mg KOH/g, besonders bevorzugt 300 bis 500 mg KOH/g, ganz besonders bevorzugt 350 bis 450 mg KOH/g, auf.

In einer weiteren bevorzugten Ausführungsform weist das als Komponente (B) eingesetzte Polyetherpolyol eine mittlere Funktionalität von beispielsweise 1 bis 6, bevorzugt 2 bis 5, besonders bevorzugt 3 bis 4,5, auf.

Komponente (B) liegt in dem erfindungsgemäßen Polyurethan-Schaumstoff im Allgemeinen in einer Menge von 10 bis 50 Gew.-%, bevorzugt 20 bis 40 Gew.-%, besonders bevorzugt 25 bis 35 Gew.-%, jeweils bezogen auf die Summe der Komponenten (A), (B), (C) und (E), vor..

### Komponente (C):

Als Komponente (C) liegt in dem erfindungsgemäßen Polyurethan-Schaumstoff mindestens ein Polyesterpolyol vor.

Die als Komponente (C) eingesetzten Polyesterpolyole werden bevorzugt durch Kondensation von mehrfunktionellen Alkoholen, vorzugsweise Diolen, mit 2 bis 12 Kohlenstoffatomen, vorzugsweise 2 bis 6 Kohlenstoffatomen, wie zum Beispiel Ethylenglycol, Diethylenglycol, Butandiol, Trymethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure den Rezyklaten von Polyethylenterephtalat und die Isomeren von Naphthalindicarbonsäuren oder deren Anhydriden, hergestellt.

Besonders bevorzugt sind Polyesterole, die aus Phthalsäureanhydrid und/oder Terephthalsäure und/oder Rezyklaten von Polyethylentherephtalat hergestellt werden. Als weitere Ausgangsstoffe bei der Herstellung der Polyester können auch hydrophobe Stoffe mitverwendet werden. Bei den hydrophoben Stoffen handelt es sich um wasserunlösliche Stoffe die einen unpolaren organischen Rest enthalten sowie über mindestens eine reaktive Gruppe, ausgewählt aus Hydroxyl, Carbonsäure, Carbonsäureester oder Mischungen daraus, verfügen. Das Äquivalentgewicht der hydrophoben Materialen liegt zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Kokosnussöl, Olivenöl oder Tallöl. Enthalten Polyester hydrophobe Stoffe, beträgt der Anteil der hydrophoben Stoffe am Gesamtmonomergehalt des Polyesterols vorzugsweise 1 bis 30 Mol%, besonders bevorzugt 4 bis 15 Mol%.

In einer besonders bevorzugten Ausführungsform liegt als Komponente (C) ein Polyesterpolyol aufgebaut aus Phthalsäureanhydrid, Diethylenglykol und Ölsäure, vor.

Die erfindungsgemäß als Komponente (C) eingesetzten Polyesterpolyole besitzen eine Funktionalität von im Allgemeinen 1,5 bis 8, vorzugsweise von 1,5 bis 5, besonders bevorzugt 1,5 bis 3.

Die erfindungsgemäß als Komponente (C) eingesetzten Polyesterpolyole besitzen im Allgemeinen Hydroxylzahlen von 100 mgKOH/g bis 850mgKOH/g, vorzugsweise 100 mgKOH/g bis 400 mgKOH/g und insbesondere 150 mgKOH/g bis 300 mgKOH/g.

Komponente (C) liegt in dem erfindungsgemäßen Polyurethan-Schaumstoff im Allgemeinen in einer Menge von 10 bis 50 Gew.-%, bevorzugt 20 bis 40 Gew.-%, besonders bevorzugt 25 bis 35 Gew.-%, jeweils bezogen auf die Summe der Komponenten (A), (B), (C) und (E), vor.

### Komponente (D):

Als Komponente (D) liegt in dem erfindungsgemäßen Polyurethan-Schaumstoff mindestens ein Polyisocyanat vor. Im Rahmen der vorliegenden Erfindung können als Polyisocyanat die üblichen aliphatischen, cycloaliphatischen und insbesondere aromatischen Di- und/oder Polyisocyanate zum Einsatz kommen.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethandiisocyanaten, Polyphenyl-polymethylen-polyisocyanate, Mischungen aus 4,4'-, 2,4'- und 2,2'-Diphenylmethan-diisocyanaten und Polyphenylenpolymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d. h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie 2,4'-, 4,4'-Diphenylmethan-diisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden. Besonders bewährt hat sich als organisches Polyisocyanat Roh-MDI mit einem NCO-Gehalt von 29 bis 33 Gew.-%.

In einer bevorzugten Ausführungsform wird das Polyisocyanat so gewählt, dass es eine Viskosität von weniger als 1000 mPas, bevorzugt von 100 bis 1000, besonders bevorzugt von 120 bis 1000, gemessen nach DIN 53019 bei 20 °C, aufweist.

In einer weiteren bevorzugten Ausführungsform weist das als Komponente (D) eingesetzte Polyisocyanat eine mittlere Funktionalität von beispielsweise 1 bis 6, bevorzugt 2 bis 4, besonders bevorzugt 2,5 bis 3,5, auf.

In einer besonders bevorzugten Ausführungsform liegt als Komponente (D) eine Mischung von 1,4'-Diphenylmethandiisocyanat mit höherfunktionellen Oligomeren und Isomeren (Rohr-MDI), mit einem NCO-Gehalt von 20 bis 40 Masse-%, bevorzugt 25 bis 35 Masse-%, beispielsweise 31,5 Masse-% und einer mittleren Funktionalität von 2 bis 4, bevorzugt 2,5 bis 3,5, auf, beispielsweise ca. 2,7, vor.

In dem erfindungsgemäßen Polyurethan-Schaumstoff liegt Komponente (D) im Allgemeinen in einer Menge von 100 bis 250 Gew.-%, bevorzugt 160 bis 200 Gew.-%, besonders bevorzugt 170 bis 190 Gew.-%, jeweils bezogen auf die Summe der Komponenten (A), (B), (C) und (E), vor.

### Komponente (E):

Der erfindungsgemäße Polyurethan-Schaumstoff wird durch Umsetzung der genannten Komponenten (A), (B), (C) und (D) in Gegenwart mindestens eines Katalysators ausgewählt aus der Gruppe bestehend aus Salzen von Carbonsäuren mit 1 bis 20 C-Atomen, aminhaltigen Verbindungen und Mischungen davon als Komponente (E) erhalten.

Die genannten als Katalysatoren genannten Verbindungen sind dem Fachmann an sich bekannt und kommerziell erhältlich.

In einer Ausführungsform des erfindungsgemäßen Polyurethan-Schaumstoffs werden als Katalysator bei dessen Herstellung Salze von Carbonsäuren mit 1 bis 20 C-Atomen eingesetzt, die bevorzugt die Vernetzungsreaktion zu Allophanaten, Biureten oder die Trimerisation zu Isocyanuraten katalysieren.

Beispiele für geeignete Salze sind Metallsalze, speziell Ammonium, Alkalimetallsalze, beispielsweise Li-, Na-, K-, Rb- oder Cs-Salze, oder Erdakalimetallsalze, beispielsweise Be-, Mg-, Ca-, Sr- oder Ba-Salze, der entsprechenden Carbonsäuren. Vorzugsweise werden dabei die Salze von linearen oder verzweigtkettigen, substituierten oder unsubstituierten, gesättigten oder ungesättigten aliphatischen oder aromatischen Carbonsäuren mit 1 bis 20 Kohlenstoffatomen, beispielsweise ausgewählt aus der Gruppe bestehend aus Ameisensäure, Essigsäure, Oktansäure, Weinsäure, Citronensäure, Ölsäure, Stearinsäure, Rizinolsäure und Mischungen davon oder substituierte oder unsubstituierte, aromatische Carbonsäuren mit 6 bis 20 Kohlenstoffen, beispielsweise ausgewählt aus der Gruppe bestehend aus Benzoesäure, Salicylsäure und Mischungen davon, verwendet. Geeignete Substituenten sind beispielsweise Hydroxy- und/oder Aminogruppen.

Besonders bevorzugte Katalysatoren dieser Ausführungsform sind ausgewählt aus der Gruppe bestehend aus Kaliumformiat, Kaliumacetat, Kaliumoktoat, Ammoniumoktoat, 1-Propanammonium-2-hydroxy-N,N,N-trimethyl-formiat, Trimethylhydroxypropylammoniumformiat und Mischungen davon.

In einer weiteren erfindungsgemäßen Ausführungsform können aminhaltige Verbindungen, die ebenfalls die Reaktion zu Allophanaten, Biureten oder die Trimerisation zu Isocyanuraten katalysieren, als Katalysatoren verwendet werden. Erfindungsgemäß bevorzugte aminhaltige Verbindungen sind beispielsweise ausgewählt aus der Gruppe bestehend aus N,N',N"-Tris(Dimethylaminopropyl)hexahydrotriazin (CAS 15875-13-5), Tris-3-dimethylaminopropylamin, Pentamethyldiethylentriamin, Pentamethyldieprophylentriamin Trimethylaminoethylethanolamin, Dimethylaminoethoxyethanol, 2,4,6-Tris(dimethylaminoethyl)phenol und Mischungen davon.

Gemäß dieser Ausführungsform ist N,N',N"-Tris(Dimethylaminopropyl)hexahydrotriazin besonders bevorzugt.

Somit betrifft die vorliegende Erfindung besonders bevorzugt den erfindungsgemäßen Polyurethan-Schaumstoff, wobei der als Komponente (E) eingesetzte wenigstens eine Katalysator ausgewählt ist aus der Gruppe bestehend aus Kaliumformiat, Kaliumacetat, Kaliumoktoat, Ammoniumoktoat, 1-Propanammonium-2-hydroxy-N,N,N-trimethyl-formiat, Trimethylhydroxypropylammoniumformiat, N,N',N"-Tris(Dimethylaminopropyl)hexahydrotriazin, Tris-3-dimethylaminopropylamin, Pentamethyldiethylentriamin, Pentamethyldieprophylentriamin Trimethylaminoethylethanolamin, Dimethylaminoethoxyethanol, 2,4,6-Tris(dimethylaminoethyl)phenol und Mischungen davon.

Neben den genannten Katalysatoren (Komponente (E)) können erfindungsgemäß auch zusätzlich weitere Katalysatoren eingesetzt werden, welche die Reaktion der Isocyanatgruppen mit den mit Isocyanatgruppen reaktiven Gruppen stark beschleunigen. Solche Katalysatoren sind beispielsweise stark basische Amine, wie z. B. tertiäre aliphatische Amine, Imidazole, Amidine, sowie Alkanolamine.

Komponente (E) liegt in dem erfindungsgemäßen Polyurethan-Schaumstoff im Allgemeinen in einer Menge von 0,1 bis 5 Gew.-%, bevorzugt 0,2 bis 3 Gew.-%, besonders bevorzugt 0,3 bis 2 Gew.-%, jeweils bezogen auf die Summe der Komponenten (A), (B), (C) und (E), vor. Wird eine Mischung von Katalysatoren eingesetzt, so gelten die genannten Mengen für diese Mischung.

Erfindungswesentlich ist, dass der erfindungsgemäße Polyurethan-Schaumstoff in Gegenwart der genannten Katalysatoren hergestellt wird. Dadurch, und durch Zusammenwirken der speziellen Komponenten (A), (B), (C) und (D) in Verbindung mit dem speziellen ISO-Index, wird eine besonders vorteilhafte Kombination von niedriger Wärmeleitfähigkeit und guter thermischer Stabilität erreicht.

### Komponente (F):

Erfindungsgemäß können als Treibmittel (Komponente (F)) im Allgemeinen die dem Fachmann bekannten Treibmittel eingesetzt werden, beispielsweise Wasser und/oder Carbonsäuren, insbesondere Ameisensäure, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane. Die Verbindungen werden zumeist ausgewählt aus der Gruppe bestehend aus Alkanen und/oder Cycloalkanen mit mindestens 4 Kohlenstoffatomen, Dialkylethern, Estern, Ketonen, Acetalen, Fluoralkanen mit 1 bis 8 Kohlenstoffatomen, und Tetraalkylsilanen mit 1 bis 3 Kohlenstoffatomen in der Alkylkette, insbesondere Tetramethylsilan. Als Beispiele seien genannt Propan, n-Butan, iso- und Cyclobutan, n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden.

Komponente (F) liegt in dem erfindungsgemäßen Polyurethan-Schaumstoff im Allgemeinen in einer Menge von 2 bis 25 Gew.-%, bevorzugt 10 bis 20 Gew.-%, jeweils bezogen auf die Summe der Komponenten (A), (B), (C) und (E), vor.

Der erfindungsgemäße Polyurethan-Schaumstoff kann neben den genannten Komponenten gegebenenfalls weitere dem Fachmann an sich bekannte Additive enthalten, beispielsweise Vernetzer. Unter einem Vernetzer wird erfindungsgemäß eine Verbindung verstanden, die ein Molekulargewicht von 60 bis 400 g/mol aufweist und mindestens 3 gegenüber Isocyanaten reaktive Wasserstoffatome aufweisen. Ein Beispiel hierfür ist Glycerin.

Die. Vernetzer werden im Allgemeinen in einer Menge von 1 bis 10 Gew.-%, bevorzugt von 2 bis 6 Gew.-%., bezogen auf die Summe der Komponenten (A), (B), (C) und (E), eingesetzt einer weiteren Ausführungsform kann der erfindungsgemäße Polyurethan-Schaumstoff mindestens ein Kettenverlängerungsmittel enthalten. Unter Kettenverlängerungsmittel werden Verbindungen verstanden, die ein Molekulargewicht von 60 bis 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerungsmittel werden im Allgemeinen in einer Menge von 2 bis 20 Gew.-%, bezogen auf die Summe der Komponenten (A), (B), (C) und (E), eingesetzt.

Vernetzer und Kettenverlängerungsmittel können einzeln oder in Kombination eingesetzt werden.

Weitere Additive sind beispielsweise ausgewählt aus der Gruppe bestehend aus oberflächenaktiven Substanzen, Stabilisatoren, beispielsweise Schaumstabilisatoren, Zellreglern, Füllstoffen, Farbstoffen, Pigmenten, Flammschutzmitteln, Antistatika, Hydrolyseschutzmitteln, fungistatisch und bakteriostatisch wirkenden Substanzen und Mischungen davon.

Geeignete Flammschutzmittel sind im Allgemeinen die aus dem Stand der Technik bekannten Flammschutzmittel, beispielsweise bromierte Ether (Ixol), bromierte Alkohole wie Dibromneopentylakohol, Tribromneopentylalkohol und PHT-4-Diol sowie chlorierte Phosphate wie z. B., Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung in einer Menge von 0 bis 65 Gew.-%, bevorzugt von 0 bis 60 Gew.-%, mehr bevorzugt von 0 bis 50 Gew.-%, Gew.-%, bezogen auf die Summe der Komponenten (A), (B), (C) und (E), eingesetzt. Liegen erfindungsgemäß Flammschutzmittel vor, so werden diese im Rahmen der vorliegenden Erfindung in einer Menge von 2 bis 65 Gew.-%, bevorzugt von 5 bis 60 Gew.-%, mehr bevorzugt von 5 bis 50 Gew.-%, Gew.-%, bezogen auf die Summe der Komponenten (A), (B), (C) und (E), eingesetzt.

Erfindungswesentlich ist auch, dass das Verhältnis von OCN-Gruppen zu OH-Gruppen, der so genannte ISO-Index, in der Reaktionsmischung zur Herstellung des erfindungsgemäßen Polyurethan-Schaumstoffes 145 bis 165, besonders bevorzugt 150 bis 160, beträgt. Dieser spezielle ISO-Index bewirkt in Kombination mit den anderen genannten erfindungswesentlichen Merkmalen, dass ein Polyurethan-Schaumstoff erhalten wird, der eine besonders vorteilhafte Kombination von niedriger Wärmeleitfähigkeit und thermischer Stabilität aufweist.

Die vorliegende Erfindung betrifft auch ein Verfahren zur Herstellung eines erfindungsgemäßen Polyurethan-Schaumstoffs, umfassend mindestens die folgenden Schritte:
(I) Inkontaktbringen der Komponenten (A), (B), (C), (D), (E) und (F), um ein Reaktionsprodukt zu erhalten, und
(II) Aufschäumen des in Schritt (I) erhaltenen Reaktionsproduktes.

Verfahren zur Herstellung von Polyurethan-Schaumstoffen sind dem Fachmann an sich bekannt. Beispielsweise kann der erfindungsgemäße Polyurethan-Schaumstoff diskontinuierlich oder kontinuierlich nach dem Prepolymer- oder vorzugsweise nach dem one-shot-Verfahren mit Hilfe bekannter Mischvorrichtungen (Schritte (I) und (II)) hergestellt werden.

Als besonders vorteilhaft hat es sich erwiesen, nach dem Zweikomponenten-Verfahren zu arbeiten und die Aufbaukomponente (A), (B), (C), (E) und (F) in Schritt (I) zu einer Polyolkomponente zu vermischen, dieses mit den Polyisocyanaten (D) zur Umsetzung zu bringen und in Schritt (II) aufzuschäumen. Eine zusammenfassende Übersicht über die Herstellung von Polyurethan-Schaumstoffen und ihre Verwendung als Deck- oder vorzugsweise Kernschicht in Verbundelementen sowie ihre Anwendung als Dämmschicht in der Kühl oder Heizungstechnik wurde z. B. in dem/den entsprechenden(m) Kapitel(n) des Kunststoffhandbuchs, Band 7 "Polyurethane", herausgegeben von Günter Oertel, Carl-Hanser-Verlag München, 1. Auflage, 1966, 2. Auflage, 1983 und 3. Auflage, 1993, publiziert.

Des Weiteren umfasst die vorliegende Erfindung auch die Verwendung des erfindungsgemäßen Polyurethan-Schaumstoffs zur Dämmung, insbesondere eine Rohrdämmung.

Der erfindungsgemäße Polyurethan-Schaumstoff wird bevorzugt zur Dämmung von Rohren, beispielsweise von Fernwärmerohren, verwendet.

In einer bevorzugten Ausführungsform wird das erfindungsgemäße Polyurethansystem zur Dämmung von gedämmten Verbundmantelrohren für erdverlegte Fernwärmenetze gemäß DIN EN 253 verwendet.

Weiterhin ist Gegenstand der Erfindung ein gedämmtes Rohr, enthaltend einen erfindungsgemäßen Polyurethan-Schaumstoff. Das erfindungsgemäße gedämmte Rohr ist beispielsweise aufgebaut aus
i) einem Mediumrohr
ii) einer Schicht aus Dämmmaterial, enthaltend den erfindungsgemäßen Polyurethan-Schaumstoff, und
iii) einem Mantelrohr.

Bei dem Mediumrohr (i) handelt es sich im Allgemeinen um ein Stahlrohr mit einem Außendurchmesser von 1 bis 120 cm, bevorzugt 4 bis 110 cm und einer Länge von 1 bis 24 Meter, bevorzugt 6 bis 16 Meter.

Auf der Außenseite des Mediumrohres angeordnet ist eine Schicht aus Dämmmaterial (ii), enthaltend den erfindungsgemäßen Polyurethan-Schaumstoff. Diese Schicht weist im Allgemeinen eine Dicke von 1 bis 10 cm, bevorzugt 2 bis 5 cm auf.

In einer bevorzugten Ausführungsform weist die Schicht aus Dämmmaterial eine Gesamtrohdichte von unter 90 kg/m³, bevorzugt von 70 bis 87 kg/m³, auf. Unter Gesamtrohdichte ist hier die Rohdichteverteilung über den Rohrquerschnitt und die Rohrlänge gemeint.

In einer weiteren bevorzugten Ausführungsform weist die Schicht aus Dämmmaterial (ii), enthaltend den erfindungsgemäßen Polyurethan-Schaumstoff eine Wärmeleitfähigkeit von weniger als 27 mW/mK, bevorzugt von 22 bis 26,9, gemessen nach EN ISO 8497, auf.

Das Mantelrohr (iii) umgibt die Schicht aus Dämmmaterial und besteht im Allgemeinen aus Kunststoff, beispielsweise aus Polyethylen, und weist üblicherweise eine Dicke von 1 bis 30 mm auf. Der Innendurchmesser des Mantelrohrs beträgt im Allgemeinen 6 bis 140 cm, bevorzugt 10 bis 120 cm.

Das Mantelrohr (iii) kann gegebenenfalls aus mehreren Schichten bestehen, die beim Extrusionsvorgang zusammengeführt werden. Ein Beispiel hierfür ist das Einbringen von mehrlagigen Folien zwischen Polyurethan-Schaumstoff und PE-Mantel, wobei die Folie zur Verbesserung der Sperrwirkung mindestens eine metallische Lage enthält. Geeignete Mantelrohre dieses Typs sind in EP-A-960 723 beschrieben.

In einer besonders bevorzugten Ausführungsform handelt es sich bei dem gedämmten Rohr um ein gedämmtes Verbundmantelrohr für erdverlegte Fernwärmenetze, welches die Anforderungen von DIN EN 253 erfüllt.

### Beispiele

Die Erfindung soll an den nachfolgenden Beispielen näher erläutert werden.

### Rezepturen 1-2 sind erfindungsgemäß, 3-5 sind Vergleichsrezepturen

| **Beispiel** | **1** | **2** | **V3** | **V4** | **V5** |
|---|---|---|---|---|---|
| **Polyether A** | 18,4 | 18,5 | 36 | 18,55 | 18,4 |
| **Polyether B** | 12 | 12 | 55,15 | 12 | 12 |
| **Polyether C** | 30 | 30 | | 30 | 30 |
| **Polyether D** | 5 | 5 | | 5 | 5 |
| **Polyester A** | 30 | 30 | | 30 | 30 |
| **DPG** | | | 4 | | |
| **Stabilisator** | 2 | 2 | 2 | 2 | 2 |
| **Kat 1** | 0,2 | 0,15 | 0,95 | 0,15 | 0,5 |
| **Kat 2** | | 0,25 | | 0,3 | |
| **Kat 3** | 0,3 | | | | |
| **Wasser** | 2,1 | 2,1 | 1,9 | 2 | 2,1 |
| **Summe** | 100 | 100 | 100 | 100 | 100 |
| **c-Pentan** | 14 | 14 | 15 | 13 | 14 |
| **IsoPM DI 92140** | 182 | 182 | 176 | 153 | 182 |
| **Iso-Index** | 155 | 156 | 128 | 132 | 156 |
| **Rohdichte Becher (g/l)** | 39 | 40 | 37 | 38 | 39 |
| **Wärmeleit-fähigkeit λ₅₀ (mW/mK)** | 25,5 | - | 27,5 | 25,2 | - |
| **Glasübergangstemperatur tanδ (°C)** | 195 | 195 | 190 | 178 | 180 |
| **Flaschentest, 40 Tage 180°C** | unverändert | unverändert | unverändert | Verkohlung | Verkohlung |

| | | | | | |
|---|---|---|---|---|---|
| • Polyether A: gestartet mit Saccharose, Pentaerythrit und Diethhylenglykol, alkoxyliert mit PO; OH-Zahl 403 mgKOH/g, Funktionalität 3,9 • Polyether B: gestartet mit Sorbitol, alkoxyliert mit PO; OH-Zahl 490 mgKOH/g, Funktionalität 4,9 • Polyether C: gestartet mit TDA, alkoxyliert mit PO und EO; OH-Zahl 390 mgKOH/g, Funktionalität 3,8 • Polyether D: gestartet mit Glyzerin, alkoxyliert mit PO; OH-Zahl 805 mgKOH/g, Funktionalität 3 • Polyester A: Veresterungsprodukt von Phtalsäureanhydrid, Diethylenglycol und Ölsäure, OH-Zahl 210 mgKOH/g, Funktionalität 2 • DPG: Dipropilenglykol, OH-Zahl 840 mgKOH/g; Funktionalität 2 • Stabilisator auf Silikonbasis (L 6900 der Fä. Momentive) • Kat 1: Dimethylcicloexylamin • Kat 2: N,N',N"-Tris(Dimethylaminopropyl)hexahydrotriazin • Kat 3: Kaliumacetat (47% in Ethylenglycol) • IsoPMDI 92140 der BASF SE, Mischung von 1,4'-Diphenylmethandiisocyanat mit höherfunktionellen Oligomeren und Isomeren (Rohr-MDI), mit einem NCO-Gehalt von 31,5 Masse-% und einer mittleren Funktionalität von ca. 2,7. | | | | | |

Die Tabelle zeigt, dass durch die Verwendung eines erfindungsgemäßen PU-Hartschaums System bei konstanter Wärmestabilität die Wärmeleitfähigkeit deutlich verbessert werden kann.

### Analytische Methoden:

Die Bestimmung der Wärmeleitfähigkeit an Verbundmantelrohren DN 50 erfolgte nach DIN EN 253:2006-02, Anhang G und ISO 8497.

Aluminiumflaschen werden von Hand mit einer Füllmenge von 210 g (entspricht einer Rohdichte von 80 kg/m³) ausgeschäumt. Verschraubungen dienten zur völligen Abdichtung der Flaschen. Die geschäumten Aluminiumflaschen werden 30 bis 40 Tagen bei 180 °C bewährt. Nach dem Aufsägen der Aluminiumflaschen werden Veränderungen der Farbe und Zellstruktur optisch beurteilt.

Die Messung der Glasübergangstemperatur erfolgte mit Hilfe der Dynamisch Mechanischen Analyse (DMA). Als Glasübergangstemperatur wurde das Maximum des Verlustfaktors tan δ genommen.

## Patentansprüche

1. Polyurethan-Schaumstoff, erhältlich durch Umsetzung von
(A) mindestens einem Polyetherpolyol als Komponente (A), basierend auf mindestens einer Verbindung ausgewählt aus der Gruppe bestehend aus Trimethylopropan, Glycerin, Pentaerythrit, Zuckerverbindungen wie beispielsweise Glukose, Sorbit, Mannit und Saccharose und Mischungen davon,
(B) mindestens einem Polyetherpolyol basierend auf mindestens einem Amin als Komponente (B),
(C) mindestens einem Polyesterpolyol als Komponente (C) und
(D) mindestens einem Polyisocyanat als Komponente (D),
in Gegenwart mindestens eines Katalysators ausgewählt aus der Gruppe bestehend aus Salzen von Carbonsäuren mit 1 bis 20 C-Atomen, aminhaltigen Verbindungen und Mischungen davon als Komponente (E) und mindestens einem Treibmittel als Komponente (F), wobei das Verhältnis von OCN-Gruppen zu OH-Gruppen (ISO-Index) 145 bis 165 beträgt.

2. Polyurethan-Schaumstoff nach Anspruch 1, **dadurch gekennzeichnet, dass** das mindestens eine Amin in Komponente (B) Toluylendiamin (TDA) ist.

3. Polyurethan-Schaumstoff nach Anspruch 1 oder 2, **dadurch gekennzeichnet, dass** als Komponente (A) eine Mischung umfassend mindestens ein Polyetherpolyol basierend auf einem Mehrfachzucker (a1), mindestens ein Polyetherpolyol basierend auf einem Einfachzucker (a2) und mindestens ein Polyetherpolyol basierend auf mindestens einem mindestens zweiwertigen Alkohol (a3), eingesetzt wird.

4. Verfahren zur Herstellung eines Polyurethan-Schaumstoffes nach einem der Ansprüche 1 bis 3, umfassend mindestens die folgenden Schritte:
(I) Inkontaktbringen der Komponenten (A), (B), (C), (D), (E) und (F), um ein Reaktionsprodukt zu erhalten, und
(II) Aufschäumen des in Schritt (I) erhaltenen Reaktionsproduktes.

5. Verwendung eines Polyurethan-Schaumstoffes nach einem der Ansprüche 1 bis 3 zur Dämmung.

6. Verwendung nach Anspruch 5, **dadurch gekennzeichnet, dass** es eine Rohrdämmung ist.

7. Gedämmtes Rohr, enthaltend einen Polyurethan-Schaumstoff nach einem der Ansprüche 1 bis 3.

## Claims

1. A polyurethane foam, which can be obtained by reacting
(A) at least one polyether polyol based on at least one compound selected from the group consisting of trimethylolpropane, glycerol, pentaerythritol, sugar compounds such as glucose, sorbitol, mannitol and sucrose, and mixtures thereof, as component (A),
(B) at least one polyether polyol based on at least one amine as component (B),
(C) at least one polyester polyol as component (C) and
(D) at least one polyisocyanate as component (D),
in the presence of at least one catalyst selected from the group consisting of salts of carboxylic acids having from 1 to 20 carbon atoms, amine-comprising compounds and mixtures thereof as component (E) and at least one blowing agent as component (F), wherein the ratio of OCN groups to OH groups (ISO index) is from 145 to 165.

2. The polyurethane foam according to claim 1, wherein the at least one amine in component (B) is toluenediamine (TDA).

3. The polyurethane foam according to claim 1 or 2, wherein a mixture comprising at least one polyether polyol based on a polysaccharide sugar (a1), at least one polyether polyol based on a monosaccharide sugar (a2) and at least one polyether polyol based on at least one at least dihydric alcohol (a3) is used as component (A).

4. A process for producing a polyurethane foam according to any of claims 1 to 3, which comprises at least the following steps:
(I) contacting of the components (A), (B), (C), (D), (E) and (F) to give a reaction product and
(II) foaming of the reaction product obtained in step (I).

5. The use of a polyurethane foam according to any of claims 1 to 3 for insulation.

6. The use according to claim 5, wherein the insulation is pipe insulation.

7. An insulated pipe comprising a polyurethane foam according to any of claims 1 to 3.

## Revendications

1. Mousse de polyuréthane, pouvant être obtenue par mise en réaction de :
(A) au moins un polyéther-polyol en tant que composant (A), à base d'au moins un composé choisi dans le groupe constitué par le triméthylolpropane, la glycérine, la pentaérythrite, les composés de sucre tels que par exemple le glucose, le sorbitol, le mannitol et le saccharose et leurs mélanges,
(B) au moins un polyéther-polyol à base d'au moins une amine en tant que composant (B),
(C) au moins un polyester-polyol en tant que composant (C) et
(D) au moins un polyisocyanate en tant que composant (D),
en présence d'au moins un catalyseur choisi dans le groupe constitué par les sels d'acides carboxyliques de 1 à 20 atomes C, les composés aminés et leurs mélanges en tant que composant (E) et d'au moins un agent gonflant en tant que composant (F), le rapport entre les groupes OCN et les groupes OH (indice ISO) étant de 145 à 165.

2. Mousse de polyuréthane selon la revendication 1, **caractérisée en ce que** la ou les aminés dans le composant (B) sont la toluylène-diamine (TDA).

3. Mousse de polyuréthane selon la revendication 1 ou 2, **caractérisée en ce qu'**un mélange comprenant au moins un polyéther-polyol à base d'un polysaccharide (a1), au moins un polyéther-polyol à base d'un monosaccharide (a2) et au moins un polyéther-polyol à base d'au moins un alcool au moins bivalent (a3) est utilisé en tant que composant (A).

4. Procédé de fabrication d'une mousse de polyuréthane selon l'une quelconque des revendications 1 à 3, comprenant au moins les étapes suivantes :
(I) la mise en contact des composants (A), (B), (C), (D), (E) et (F) pour obtenir un produit de réaction, et
(II) le moussage du produit de réaction obtenu à l'étape (I).

5. Utilisation d'une mousse de polyuréthane selon l'une quelconque des revendications 1 à 3 pour l'isolation.

6. Utilisation selon la revendication 5, **caractérisée en ce qu'**il s'agit d'une isolation de tuyau.

7. Tuyau isolé, contenant une mousse de polyuréthane selon l'une quelconque des revendications 1 à 3.
